(19) Europäisches Patentamt / European Patent Office / Office européen des brevets

(11) **EP 4 240 953 B1**

(12) **EUROPÄISCHE PATENTSCHRIFT**

(45) Veröffentlichungstag und Bekanntmachung des Hinweises auf die Patenterteilung:
**25.03.2026   Patentblatt 2026/13**

(21) Anmeldenummer: **21805480.7**

(22) Anmeldetag: **02.11.2021**

(51) Internationale Patentklassifikation (IPC):
**F02D 41/22** *(2006.01)*      **F02D 41/28** *(2006.01)*

(52) Gemeinsame Patentklassifikation (CPC):
**F02D 41/221;** F02D 2041/286; F02D 2200/0602; Y02T 10/40

(86) Internationale Anmeldenummer:
**PCT/EP2021/080404**

(87) Internationale Veröffentlichungsnummer:
**WO 2022/096464 (12.05.2022 Gazette 2022/19)**

(54) **VERFAHREN ZUM BETREIBEN EINES INJEKTORS AN EINER BRENNKRAFTMASCHINE, STEUERGERÄT FÜR EINE BRENNKRAFTMASCHINE, EINGERICHTET ZUR DURCHFÜHRUNG EINES SOLCHEN VERFAHRENS, UND BRENNKRAFTMASCHINE MIT EINEM SOLCHEN STEUERGERÄT**

METHOD FOR OPERATING AN INJECTOR ON AN INTERNAL COMBUSTION ENGINE, CONTROL UNIT FOR AN INTERNAL COMBUSTION ENGINE, DESIGNED TO CARRY OUT A METHOD OF THIS TYPE, AND INTERNAL COMBUSTION ENGINE HAVING A CONTROL UNIT OF THIS TYPE

PROCÉDÉ D'UTILISATION D'UN INJECTEUR SUR UN MOTEUR À COMBUSTION INTERNE, UNITÉ DE COMMANDE POUR MOTEUR À COMBUSTION INTERNE CONÇUE POUR METTRE EN OEUVRE UN TEL PROCÉDÉ, ET MOTEUR À COMBUSTION INTERNE ÉQUIPÉ D'UNE TELLE UNITÉ DE COMMANDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.11.2020   DE 102020214001**

(43) Veröffentlichungstag der Anmeldung:
**13.09.2023   Patentblatt 2023/37**

(73) Patentinhaber: **Rolls-Royce Solutions GmbH**
**88045 Friedrichshafen (DE)**

(72) Erfinder:
- **BOOG, Manuel**
  **88326 Aulendorf (DE)**
- **PROSPERO, Andrea**
  **88085 Langenargen (DE)**

(74) Vertreter: **Kordel, Mattias et al**
**Gleiss Große Schrell und Partner mbB**
**Patentanwälte Rechtsanwälte**
**Leitzstrasse 45**
**70469 Stuttgart (DE)**

(56) Entgegenhaltungen:
**EP-A1- 3 121 425      DE-A1- 102019 001 677**
**US-A1- 2020 232 411**

- **ANONYMOUS: "Euler number (physics) - Wikipedia", 3 November 2020 (2020-11-03), pages 1 - 2, XP055884775, Retrieved from the Internet <URL:https://en.wikipedia.org/w/index. php?title=Euler_number_(physics)& oldid=986935221> [retrieved on 20220128]**

**Beschreibung**

Die Erfindung betrifft ein Verfahren zum Betreiben eines Injektors an einer Brennkraftmaschine, ein Steuergerät für eine Brennkraftmaschine, sowie eine Brennkraftmaschine, die eingerichtet ist zur Durchführung eines solchen Verfahrens.

Bei einem solchen Verfahren beziehungsweise einer solchen Brennkraftmaschine wird mittels eines Injektors Brennstoff in einen Brennraum der Brennkraftmaschine eingebracht (DE 10 2019 001 677 A1, US 2020/0232411 A1, EP 3 121 425 A1). Dabei besteht das Problem, dass ein solcher Injektor durch die Brennstoffeinbringung, insbesondere Brennstoffeinspritzung, verschleißen kann. Insbesondere ist die Lebensdauer eines solchen Injektors durch Kavitationsverschleiß einer Einspritzdüse begrenzt, wobei allmählich an einem Düsensackloch und an einem Übertritt in Spritzlöcher, sowie auch in den Spritzlöchern Materialabtrag und/oder Erosionseffekte auftreten, welche ein Sprühbild des Injektors sowie den Durchfluss durch den Injektor beeinflussen. Auch an einem Pilotventil des Injektors kann es zu Schadbildern kommen, die ebenfalls von einer Schaltanzahl und Druckverhältnissen am Injektor abhängen. Eine Schädigung kann also insbesondere auch an Aktorikkomponenten im Inneren des Injektors auftreten. Ist die Kavitationsschädigung im Bereich der Einspritzdüse weit fortgeschritten, kann es sogar zu Rissbildung und spontanem Abbrechen einer Düsenkuppe kommen. Beschädigungen am Injektor verursachen wiederum eine unkontrollierte Brennstoffeinbringung in den Brennraum. Um derartige Schäden und Probleme sicher auszuschließen, sind bisher fest vorgegebene Wartungsintervalle für Injektoren vorgesehen, die verhältnismäßig kurz gewählt sind. Insbesondere zeigt die Erfahrung, dass ein solcher Injektor vielfach problemlos deutlich länger betrieben werden kann, als es das vorgeschriebene Wartungsintervall vorsieht. Ein frühzeitiges Tauschen der Injektoren ist daher unwirtschaftlich und in der Regel auch unnötig. Andererseits ist es nicht möglich, das Tauschintervall einfach zu verlängern, da dann erhebliche Risiken für den Betrieb der Brennkraftmaschine bestehen. Eine injektorindividuelle Sensorik zur Überwachung der Funktionsfähigkeit der Injektoren ist sehr teuer und kompliziert.

Der Erfindung liegt die Aufgabe zugrunde, ein Verfahren zum Betreiben eines Injektors an einer Brennkraftmaschine, ein Steuergerät für eine Brennkraftmaschine, sowie eine Brennkraftmaschine zu schaffen, wobei die genannten Nachteile nicht auftreten.

Die Aufgabe wird gelöst, indem ein Verfahren gemäß Anspruch 1, ein Steuergerät gemäß Anspruch 10 und eine Brennkraftmaschine gemäß Anspruch 11 geschaffen werden. Vorteilhafte Ausgestaltungen ergeben sich aus den abhängigen Ansprüchen.

Die Aufgabe wird insbesondere gelöst, indem ein Verfahren zum Betreiben eines Injektors an einer Brennkraftmaschine geschaffen wird, wobei mittels des Injektors Brennstoff in einen Brennraum der Brennkraftmaschine eingebracht wird, wobei für eine Mehrzahl von Einbringereignissen jeweils ein Verschleißwert für den Injektor erfasst wird. Jeder erfasste Verschleißwert wird einer Verschleißwertklasse einer Mehrzahl von Verschleißwertklassen zugeordnet. Für jede Verschleißwertklasse der Mehrzahl von Verschleißwertklassen wird eine Klassenhäufigkeit derjenigen erfassten Verschleißwerte ermittelt, die der Verschleißwertklasse zugeordnet sind. Anhand der Klassenhäufigkeiten der Verschleißwertklassen wird ein Gesamtverschleißwert für den Injektor berechnet, und ein Injektorzustand des Injektors wird anhand des Gesamtverschleißwerts bewertet. Somit kann in einfacher und kostengünstiger Weise, ohne komplizierte Sensorik, eine Bewertung des Injektorzustands für den Injektor erfolgen, sodass festgestellt werden kann, ob dieser weiter genutzt werden kann oder getauscht werden muss. Die Injektorstandzeit kann in Abhängigkeit von dem ermittelten Injektorzustand variabel gewählt werden, sodass die Lebenszykluskosten des Injektors sinken. Das Verfahren kann bei einer bestehenden Brennkraftmaschine in einfacher Weise, insbesondere durch Aufspielen eines entsprechenden Computerprogrammprodukts, nachgerüstet werden. Hierfür bedarf es bevorzugt keiner Hardware-Komponenten, die nicht ohnehin bei einer Brennkraftmaschine vorhanden sind.

Insbesondere wird für jedes Einbringereignis der Mehrzahl von Einbringereignissen ein Verschleißwert für den Injektor erfasst. Dabei ist es möglich, dass für jedes Einbringereignis des Injektors ein Verschleißwert erfasst wird. Es ist aber auch möglich, dass nur für eine ausgewählte Mehrzahl der Einbringereignisse, mithin eine Unterzahl von Eingbringereignissen, jeweils ein Verschleißwert erfasst wird.

Unter einem Einbringereignis wird insbesondere ein Eindüsen- oder Einspritzen von Brennstoff mittels des Injektors in den Brennraum verstanden. Ein solches Einbringereignis kann insbesondere eine Haupteinspritzung, eine Voreinspritzung und/oder eine Nacheinspritzung sein.

Dass der Brennstoff in den Brennraum eingebracht wird, bedeutet insbesondere, dass der Brennstoff mittelbar oder unmittelbar in den Brennraum eingebracht wird. Insbesondere kann der Injektor unmittelbar in den Brennraum münden. Es ist aber auch möglich, dass der Injektor stromaufwärts des Brennraums, insbesondere stromaufwärts eines Einlassventils, Brennstoff in einen Ladepfad oder Luftpfad der Brennkraftmaschine einbringt. Die Einbringung des Brennstoffs kann somit insbesondere als Einzelpunkteinbringung, als Mehrpunkteinbringung, oder auch als Direkteinbringung ausgestaltet sein. Die Einbringung des Brennstoffs ist insbesondere eine Einspritzung, wenn der Brennstoff flüssig ist, insbesondere wenn der Brennstoff unter Normalbedingungen, das heißt bei 1013 mbar und 25 °C, flüssig ist. Der Injektor kann insbesondere als Flüssig-Brennstoff-Injektor, insbesondere als Diesel-Injektor, ausgebildet sein. Es ist aber auch möglich, dass die Einbringung ein Eindüsen von Brenngas ist.

Dass jeder erfasste Verschleißwert einer Verschleißwertklasse einer Mehrzahl von Verschleißwertklassen zugeordnet wird, bedeutet insbesondere, dass die erfassten Verschleißwerte histogrammiert werden. Die Verschleißwertklassen werden bevorzugt insbesondere gebildet, indem eine Verschleißwertskala in vorzugweise unmittelbar aneinander grenzende Verschleißwertbereiche eingeteilt wird, wobei diese Verschleißwertbereiche die Verschleißwert- lassen bilden. Dass ein erfasster Verschleißwert einer Verschleißwertklasse zugeordnet wird, bedeutet dann, dass ein Klassenzähler derjenigen Verschleißwertklasse, in welche der Verschleißwert fällt, hochgezählt, das heißt inkrementiert wird. Somit wird letztlich eine Häufigkeitsverteilung der erfassten Verschleißwerte über die Verschleißwertklassen ermittelt, wobei der Injektorzustand insbesondere auf der Grundlage dieser Häufigkeitsverteilung bewertet werden kann.

Gemäß einer bevorzugten Ausgestaltung wird die Verschleißwertskala in eine Mehrzahl von Verschleißwert- lassen mit gleicher Klassenbreite unterteilt. Es ist aber gemäß einer anderen Ausgestaltung auch möglich, dass die Verschleißwertskala in eine Mehrzahl von Verschleißwertklassen mit verschiedenen Klassenbreiten unterteilt wird.

Bevorzugt erfolgt die Zuordnung der Verschleißwerte zu den Verschleißwertklassen zusätzlich in Abhängigkeit von wenigstens einem weiteren Parameter, insbesondere in Abhängigkeit von einem Brennstoffdruck am Injektor oder in Abhängigkeit von einer Differenz zwischen dem Brennstoffdruck und einem Gegendruck, gegen den der Brennstoff ausgebracht wird. Der Brennstoffdruck und der Gegendruck können auch separat als weitere zusätzliche Parameter für die Zuordnung zu den Verschleißwertklassen verwendet werden. Als der wenigstens eine weitere Parameter kann zusätzlich oder alternativ auch eine Einbringdauer verwendet werden, oder wenigstens eine Information darüber, ob der Injektor in einem einzelnen Einbringereignis in einem ballistischen Bereich oder in einem linearen Bereich betrieben wird. Unter einem ballistischen Bereich wird dabei eine Betriebsweise des Injektors verstanden, bei der eine Injektornadel nicht ihre Endstellung in einer geöffneten Position erreicht, bevor sie wieder schließt. Alternativ oder zusätzlich kann als der wenigstens eine weitere Parameter auch eine Information darüber verwendet werden, welcher Art von Einbringereignis der betrachtete Verschleißwert zugeordnet ist, insbesondere ob es sich bei dem Einbringereignis um eine Haupteinspritzung, eine Nacheinspritzung, insbesondere eine erste Nacheinspritzung oder eine zweite Nacheinspritzung, oder eine Voreinspritzung handelt.

Auf diese Weise wird insbesondere bevorzugt eine mehrdimensionale Histogrammierung vorgenommen, das heißt insbesondere ein mehrdimensionales Histogramm der Verschleißwerte generiert. Es ist aber alternativ oder zusätzlich auch möglich, dass eine Gewichtung der Verschleißwerte in Abhängigkeit von dem wenigstens einen weiteren Parameter vorgenommen wird. Diese Gewichtung kann beispielsweise dazu führen, dass ein an sich niedrigerer Verschleißwert aufgrund des ihm zugeordneten weiteren Parameters einer höheren Verschleißwertklasse zugeordnet wird - oder umgekehrt.

Es wird also nun für jede Verschleißwertklasse der Mehrzahl von Verschleißwertklassen eine Klassenhäufigkeit der Verschleißwerte ermittelt, die der Verschleißwertklasse zugeordnet sind. Aus den Klassenhäufigkeiten der Verschleißwertklassen wird dann der Gesamtverschleißwert berechnet.

Der Injektorzustand ist insbesondere ein Ausmaß einer Schädigung und/oder eines Verschleißes des Injektors. Dass der Injektorzustand bewertet wird, bedeutet insbesondere, dass ermittelt wird, ob der Injektor weiter genutzt werden kann, oder ob er getauscht werden muss. Bevorzugt wird aber der Injektorzustand herangezogen um zu ermitteln, wie stark und/oder auf welche Weise der Injektor geschädigt und/oder verschlissen ist.

Insbesondere wird der Gesamtverschleißwert für den Injektor aus den Klassenhäufigkeiten der Verschleißwertklassen berechnet.

Das Verfahren wird bevorzugt während eines Betriebs der Brennkraftmaschine fortlaufend durchgeführt.

Es ist möglich, dass der Gesamtverschleißwert nach jedem Einbringereignis neu berechnet oder aktualisiert wird. Es ist aber auch möglich, dass der Gesamtverschleißwert jeweils nach einer bestimmten Anzahl von Einbringereignissen neu berechnet oder aktualisiert wird. Es ist auch möglich, dass der Gesamtverschleißwert nach einer bestimmten Anzahl von Betriebsstunden neu berechnet oder aktualisiert wird. Ebenso ist es möglich, dass die Bewertung des Injektorzustands nicht fortlaufend, sondern zeit- und/oder ereignisabhängig, insbesondere nach jedem Einbringereignis, nach einer vorbestimmten Anzahl von Einbringereignissen, oder nach einer bestimmten Anzahl von Betriebsstunden, neu durchgeführt wird.

Bevorzugt wird das Verfahren für jeden Injektor einer Mehrzahl von Injektoren der Brennkraftmaschine separat durchgeführt. Typischerweise weist eine Brennkraftmaschine eine Mehrzahl von Injektoren auf, wobei das hier beschriebene Verfahren ohne weiteres separat für jeden Injektor der Mehrzahl von Injektoren durchgeführt werden kann. Insbesondere wird das Verfahren bevorzugt für einen Injektor neu begonnen, nachdem dieser - gegebenenfalls vorzeitig - getauscht wurde.

Das Verfahren wird bevorzugt nur durchgeführt, wenn ein stationärer Betriebszustand der Brennkraftmaschine vorliegt. Andernfalls wird bevorzugt solange gewartet, bis ein stationärer Betriebszustand vorliegt. Das Verfahren wird erst dann wieder fortgesetzt. Aussagekräftige Verschleißwerte für den Injektor können insbesondere in stationären Betriebspunkten erzielt werden.

Es ist aber alternativ gemäß einer bevorzugten Ausgestaltung auch möglich, dass das Verfahren unabhängig davon durchgeführt wird, ob die Brennkraftmaschine momentan in einem stationären oder in einem transienten Betriebszustand betrieben wird. Insbesondere kann das Verfahren sinnvoll auch in transienten Betriebszuständen durchgeführt werden.

Gemäß einer bevorzugten Ausgestaltung wird für einen - zeitlich zusammenhängenden - transienten Betriebszustand eine maximale Schädigung des Injektors angenommen. Dies bedeutet insbesondere, dass für jedes Einbringereignis des Injektors innerhalb des transienten Betriebszustands ein maximaler Verschleißwert erfasst oder das jeweilige Einbringereignis einer maximalen Verschleißwertklasse zugeordnet wird. Diese Vorgehensweise ermöglicht eine besonders einfache Erfassung transienter Betriebszustände.

Erfindungsgemäß ist vorgesehen, dass als Verschleißwert eine Kavitationszahl erfasst wird, die für eine während eines Einbringereignisses an dem Injektor auftretende Kavitation charakteristisch ist. Da Kavitation einen Hauptverschleißmechanismus des Injektors darstellt, ist es vorteilhaft, diese zu quantifizieren und den Injektorzustand auf der Grundlage der quantifizierten Kavitation, das heißt der Kavitationszahl, beurteilen zu können.

Erfindungsgemäß ist vorgesehen, dass die Kavitationszahl anhand von Druckverhältnissen an dem Injektor ermittelt wird. Dabei hat sich herausgestellt, dass die Druckverhältnisse an dem Injektor wesentlich sind für das Auftreten von Kavitation und somit auch für den Verschleiß des Injektors. Insbesondere wird die Kavitationszahl bevorzugt anhand des Brennstoffdrucks am Injektor, insbesondere als Funktion des Brennstoffdrucks am Injektor, ermittelt.

Die Kavitationszahl wird als Quotient ermittelt, wobei im Zähler des Quotienten eine Differenz zwischen dem Brennstoffdruck am Injektor und dem Gegendruck steht, wobei im Nenner des Quotienten der Gegendruck steht. Insbesondere wird die Kavitationszahl bevorzugt als Quotient berechnet.

Der Brennstoffdruck ist insbesondere derjenige Druck, mit dem der Brennstoff am Injektor ansteht und aus dem Injektor ausgetrieben wird. Als Brennstoffdruck kann insbesondere auch ein Hochdruckspeicherdruck in einem gemeinsamen Hochdruckspeicher für eine Mehrzahl von Injektoren, insbesondere in einem sogenannten Rail eines Common Rail-Systems, der auch als Raildruck bezeichnet wird, verwendet werden. Alternativ oder zusätzlich kann als Brennstoffdruck auch ein Einzelspeicherdruck in einem dem Injektor zugeordneten Brennstoff-Einzelspeicher verwendet werden.

Der Gegendruck ist insbesondere derjenige Druck, der in einem Volumen herrscht, in das der Brennstoff durch den Injektor eingebracht wird. Der Gegendruck kann insbesondere ein Brennraumdruck sein, wenn der Injektor zur Direkteinspritzung oder Direkteindüsung in den Brennraum vorgesehen und angeordnet ist.

Der Brennstoffdruck wird bevorzugt mittels eines Brennstoffdruck-Sensors erfasst, insbesondere gemessen. Der Gegendruck kann mit einem Gegendruck-Sensor gemessen werden, insbesondere mittels eines Brennraumdrucksensors. Es ist aber auch möglich, dass der Gegendruck, insbesondere der Brennraumdruck, insbesondere abhängig von einem momentanen Betriebspunkt der Brennkraftmaschine, aus einem Kennfeld ausgelesen wird. Es hat sich herausgestellt, dass dies eine Bestimmung des Gegendrucks mit hinreichend hoher Genauigkeit ermöglicht, sodass eine Messung nicht zwingend erforderlich ist. Gemäß einer anderen bevorzugten Ausgestaltung ist es auch möglich, dass der Gegendruck als konstant angenommen wird, wobei in bevorzugter Ausgestaltung ein vorbestimmter Druckwert, insbesondere Schätzwert, für den Gegendruck angesetzt wird. Letzteres ist insbesondere vorteilhaft möglich, wenn der Brennstoffdruck sehr viel größer ist als der Gegendruck.

Zur Berechnung der Kavitationszahl wird insbesondere zuerst die Differenz als Zähler des Quotienten gebildet, wobei der Gegendruck von dem Brennstoffdruck am Injektor abgezogen wird. Anschließend wird der Gegendruck als Nenner des Quotienten herangezogen, das heißt die zuvor berechnete Differenz wird durch den Gegendruck geteilt. Das Ergebnis ist dann die Kavitationszahl.

Insbesondere wird die Kavitationszahl nach folgender Gleichung berechnet:

$$K = \frac{p_1 - p_2}{p_2}, \tag{1}$$

wobei in Gleichung (1) $p_1$ der Brennstoffdruck am Injektor, $p_2$ der Gegendruck, und K die Kavitationszahl ist.

Gemäß einer Weiterbildung der Erfindung ist vorgesehen, dass der Gesamtvergleichswert berechnet wird als Summe der - vorzugsweise gewichteten - Klassenhäufigkeiten über die Verschleißwertklassen. Der Injektorzustand wird somit insbesondere abhängig von der Anzahl der Häufigkeiten bewertet, mit denen bestimmte Verschleißwerte, insbesondere bestimmte Kavitationszahlen, aufgetreten sind. Dies erlaubt insbesondere eine plausible Abschätzung des Verschleißes, insbesondere des Kavitationsverschleißes.

Die Gewichtung, die bevorzugt bezüglich der Verschleißwertklassen durchgeführt wird, erlaubt es, eine Verschleißrelevanz für die verschiedenen Verschleißwertklassen verschieden festzulegen. Es ist beispielsweise offensichtlich, dass nicht jeder Wert der Kavitationszahl eine gleichermaßen relevante Schädigung oder Beeinflussung des Injektorzustands bedeutet. Es ist daher sinnvoll, die Verschleißwertklassen nach ihrer Relevanz zu gewichten.

Gemäß einer Weiterbildung der Erfindung ist daher vorgesehen, dass die Klassenhäufigkeiten zur Berechnung des Gesamtverschleißwerts mit einem - insbesondere verschleißwertklassenbezogenen - Klassenhäufigkeits-Maximalwert gewichtet werden. Dabei wird bevorzugt jeder Verschleißwertklasse ein vorbestimmter Klassenhäufigkeits-Maximalwert zugeordnet, der anschaulich als eine maximale Anzahl aufgetretener Verschleißwerte in der jeweiligen Verschleißwertklasse interpretiert kann, die für den Injektor gerade noch akzeptabel ist, oder ab der eine Wartungsmaßnahme, beispielsweise ein Tausch des Injektors, getroffen werden sollte. Insbesondere werden bevorzugt die Klassenhäufigkeiten jeweils durch den ihnen zugeordneten Klassenhäufigkeits-Maximalwert dividiert.

Insbesondere wird der Gesamtverschleißwert bevorzugt nach folgender Gleichung berechnet:

$$S = \sum_{i=1}^{j} \frac{n_i}{s_i}, \qquad\qquad (2)$$

wobei in Gleichung (2) S der Gesamtverschleißwert ist, $n_i$ ist die jeweilige Klassenhäufigkeit der Verschleißwertklasse i und $S_i$ der jeweilige Klassenhäufigkeits-Maximalwert, der der Verschleißwertklasse i zugeordnet ist, wobei j die höchste Verschleißwertklasse bezeichnet, und wobei entsprechend die Summation über die Verschleißwertklassen verläuft.

Gemäß einer Weiterbildung der Erfindung ist vorgesehen, dass der vorbestimmte Klassenhäufigkeits-Maximalwert für jede Verschleißwertklasse aus einem Kennfeld - vorzugsweise abhängig von einer Einbringdauer, insbesondere Einspritz- oder Eindüsdauer - ausgelesen wird. Das bedeutet insbesondere Folgendes: Es existiert ein Kennfeld, in dem die den Verschleißwertklassen zugeordneten Kavitationszahlen, oder direkt die Verschleißwertklassen, aufgetragen sind gegen den vorbestimmten Klassenhäufigkeits-Maximalwert. Somit kann für jede Verschleißwertklasse der ihr zugeordnete vorbestimmte Klassenhäufigkeits-Maximalwert aus dem Kennfeld ausgelesen werden.

Vorzugsweise existiert für eine Mehrzahl verschiedener Einbringdauern jeweils ein verschiedenes solches Kennfeld, wobei vorzugsweise zwischen den Kennfeldeinträgen extrapoliert werden kann, wenn die Einbringdauer nicht exakt einer Einbringdauer entspricht, für die ein Kennfeldeintrag hinterlegt ist. Das entsprechende Kennfeld kann insbesondere die Form einer Wöhlerkurve haben. Insbesondere sind bevorzugt hohen Kavitationszahlen niedrige vorbestimmte Klassenhäufigkeits-Maximalwerte zugeordnet, wobei niedrigen Kavitationszahlen hohe vorbestimmte Klassenhäufigkeits-Maximalwerte zugeordnet sind.

In einer vereinfachten bevorzugten Ausgestaltung können auch lediglich verschiedene Kennfelder in Abhängigkeit von einem insbesondere binären Parameter existieren, der angibt, ob der Injektor im ballistischen oder im linearen Bereich betrieben wird.

Gemäß einer Weiterbildung der Erfindung ist vorgesehen, dass der Injektorzustand bewertet wird, indem der Gesamtverschleißwert mit einem vorbestimmten Gesamtverschleißwert-Maximalwert verglichen wird. Insbesondere der oben gemäß Gleichung (2) definierte Gesamtverschleißwert nimmt im Laufe der Betriebsdauer der Brennkraftmaschine beziehungsweise des Injektors zu. Der Injektorzustand kann daher vorteilhaft bewertet werden, indem geprüft wird, inwieweit sich der Gesamtverschleißwert bereits dem vorbestimmten Gesamtverschleißwert-Maximalwert angenähert hat. Nach einer bevorzugten Ausgestaltung ist es möglich, dass der Gesamtverschleißwert-Maximalwert gleich eins ist.

Gemäß einer Weiterbildung der Erfindung ist vorgesehen, dass anhand des Gesamtverschleißwerts, insbesondere anhand des Vergleichs des Gesamtverschleißwerts mit dem Gesamtverschleißwert-Maximalwert, eine Reststandzeit für den Injektor ermittelt wird. Somit kann eine Prognose für eine weitere mögliche Betriebsdauer des Injektors bis zu einer Wartung, insbesondere einen Tausch des Injektors, getroffen werden. Dies erfolgt bevorzugt unter Berücksichtigung eines - insbesondere vergangenen, das heißt historischen - Lastprofils und/oder einer Drehzahl der Brennkraftmaschine, wobei vorzugsweise angenommen wird, dass das zukünftige Lastprofil der Brennkraftmaschine sich zumindest ähnlich dem vergangenen Lastprofil gestaltet. Es wird so insbesondere aus der vergangenen Entwicklung des Gesamtverschleißwerts, insbesondere in Richtung des Gesamtverschleißwert-Maximalwerts, eine Extrapolation für die weitere Entwicklung durchgeführt, insbesondere mit Blick auf die Frage, wann der Gesamtverschleißwert-Maximalwert durch den Gesamtverschleißwert erreicht wird. Dies ergibt dann eine Aussage über die Reststandzeit des Injektors.

Gemäß einer Weiterbildung der Erfindung ist vorgesehen, dass verschiedene Einbringereignisse innerhalb eines Arbeitsspiels der Brennkraftmaschine separat verschiedenen Verschleißwertklassen zugeordnet werden. Insbesondere kann die Zuordnung der Verschleißwerte zu den Verschleißwertklassen für die verschiedenen Einbringereignisse verschieden ausgestaltet sein. Es werden also insbesondere verschiedene Histogramme für die verschiedenen Einbringereignisse erzeugt. Unter verschiedenen Einbringereignissen innerhalb eines Arbeitsspiels werden insbesondere Ereignisse wie eine Voreinspritzung, eine Haupteinspritzung, eine Nacheinspritzung, insbesondere eine erste Nacheinspritzung und eine zweite Nacheinspritzung, verstanden. Für diese verschiedenen Einbringereignisse liegen typischerweise verschiedene Bedingungen an dem Injektor vor, sodass es vorteilhaft ist, die Einbringereignisse separat zu behandeln und sie separat bezüglich verschiedener Verschleißwertklassen zu histogrammieren.

Gemäß einer Weiterbildung der Erfindung ist vorgesehen, dass zur Berechnung des Gesamtverschleißwerts alle verschiedenen Einbringereignisse innerhalb eines Arbeitsspiels gemeinsam berücksichtigt werden. Bei der Summation wird somit insbesondere eine Gesamtsumme über alle Verschleißwertklassen aller Einbringereignisse durchgeführt. Somit kann eine besonders einfache und leicht zu berechnende Bewertung des Injektorzustands durchgeführt werden.

**EP 4 240 953 B1**

Die Aufgabe wird auch gelöst, indem ein Steuergerät für eine Brennkraftmaschine geschaffen wird, das eingerichtet ist, um für eine Mehrzahl von Einbringereignissen jeweils einen Verschleißwert für einen Injektor zu erfassen, um jeden erfassten Verschleißwert einer Verschleißwertklasse einer Mehrzahl von Verschleißwertklassen zuzuordnen, um für jede Verschleißwertklasse der Mehrzahl von Verschleißwertklassen eine Klassenhäufigkeit der der Verschleißwertklasse zugeordneten erfassten Verschleißwerte zu ermitteln, und um anhand der Klassenhäufigkeiten der Verschleißwertklassen einen Gesamtverschleißwert für den Injektor zu berechnen. Das Steuergerät ist weiter eingerichtet, um einen Injektorzustand des Injektors anhand des Gesamtverschleißwerts zu bewerten. In Zusammenhang mit dem Steuergerät ergeben sich insbesondere die Vorteile, die bereits in Zusammenhang mit dem Verfahren erläutert wurden.

Das Steuergerät ist insbesondere eingerichtet zur Durchführung eines erfindungsgemäßen Verfahrens oder eines Verfahrens nach einer der zuvor beschriebenen Ausführungsformen.

Die Aufgabe wird auch gelöst, indem eine Brennkraftmaschine geschaffen wird, die wenigstens einen Brennraum sowie wenigstens einen Injektor aufweist, der eingerichtet ist, um Brennstoff in den wenigstens einen Brennraum der Brennkraftmaschine einzubringen. Die Brennkraftmaschine weist ein erfindungsgemäßes Steuergerät oder ein Steuergerät nach einem der zuvor beschriebenen Ausführungsbeispiele auf.

In Zusammenhang mit der Brennkraftmaschine ergeben sich insbesondere die Vorteile, die bereits in Zusammenhang mit dem Verfahren und dem Steuergerät erläutert wurden.

Vorzugsweise weist die Brennkraftmaschine einen Brennstoffdruck-Sensor auf, der eingerichtet ist zur Erfassung eines unmittelbar am Injektor anstehenden Brennstoffdrucks, insbesondere am Injektor, oder eines dem am Injektor anstehenden Brennstoff zugeordneten Brennstoffdrucks, beispielsweise eines Brennstoffdrucks in einer gemeinsamen Leiste eines Common-Rail-Systems, oder eines Drucks in einem Einzelspeicher des Injektors. Der Brennstoffdruck-Sensor ist bevorzugt mit dem Steuergerät wirkverbunden, sodass der erfasste Brennstoffdruck von dem Steuergerät empfangen werden kann.

Gemäß einer bevorzugten Ausgestaltung ist es möglich, dass die Brennkraftmaschine einen Gegendruck-Sensor aufweist, der eingerichtet ist, um einen Gegendruck, insbesondere Brennraumdruck, für ein Volumen zu erfassen, in welches der Brennstoff durch den Injektor eingebracht wird. Dieser Gegendruck-Sensor kann insbesondere ein Brennraumdrucksensor sein. Der Gegendruck-Sensor ist vorzugsweise mit dem Steuergerät wirkverbunden, sodass der erfasste Gegendruck durch das Steuergerät empfangen werden kann.

Es ist alternativ aber auch möglich, dass das Steuergerät eingerichtet ist, um den Gegendruck - insbesondere betriebspunktabhängig - aus einem Kennfeld auszulesen oder zu berechnen, oder um einen vorbestimmten, konstanten Wert für den Gegendruck zu verwenden.

Das Steuergerät ist bevorzugt eingerichtet, um als Verschleißwert eine für eine während eines Einbringereignisses an dem Injektor auftretende Kavitation charakteristische Kavitationszahl zu erfassen, insbesondere zu berechnen, wobei die Kavitationszahl bevorzugt anhand der Druckverhältnisse am Injektor ermittelt, insbesondere berechnet wird, bevorzugt in Abhängigkeit von dem Brennstoffdruck am Injektor, insbesondere als Quotient einer Differenz zwischen dem Brennstoffdruck zu dem Gegendruck dividiert durch den Gegendruck.

Vorzugsweise ist das Steuergerät eingerichtet, um abhängig von dem Injektorzustand eine den Injektorzustand anzeigende Meldung oder einen Warnhinweis auszugeben, insbesondere eine Wartungs- oder Tauschempfehlung. Alternativ oder zusätzlich ist das Steuergerät bevorzugt eingerichtet, um eine Reststandzeit für den Injektor zu ermitteln, und die Reststandzeit vorzugsweise auszugeben.

Insbesondere ist das Steuergerät bevorzugt eingerichtet, um im Sinne des oben erläuterten Verfahrens den Gesamtverschleißwert zu berechnen und mit dem vorbestimmten Gesamtverschleißwert-Maximalwert zu vergleichen, sowie vorzugsweise eine Tausch- oder Wartungsempfehlung auszugeben, wenn der Gesamtverschleißwert größer oder gleich dem Gesamtverschleißwert-Maximalwert ist.

Die Erfindung wird im Folgenden anhand der Zeichnung näher erläutert. Dabei zeigen:

Figur 1    eine schematische Darstellung eines Ausführungsbeispiels einer Brennkraftmaschine sowie eines Ausführungsbeispiels eines Steuergeräts für die Brennkraftmaschine, und

Figur 2    eine schematische Darstellung einer Ausführungsform eines Verfahrens zum Betreiben eines Injektors an einer Brennkraftmaschine, insbesondere der Brennkraftmaschine gemäß Figur 1, in Form eines Flussdiagramms.

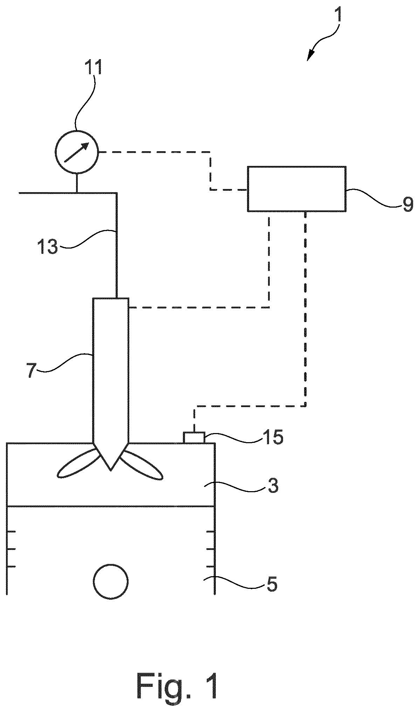

**Fig. 1** zeigt eine schematische Darstellung eines Ausführungsbeispiels einer Brennkraftmaschine 1, mit wenigstens einem Brennraum 3, in dem ein Kolben 5 hubbeweglich verlagerbar ist. Die Brennkraftmaschine 1 ist demnach bei dem hier dargestellten Ausführungsbeispiel als Hubkolbenmotor ausgebildet. Die Brennkraftmaschine 1 weist außerdem einen Injektor 7 auf, der eingerichtet und angeordnet ist, um Brennstoff in den Brennraum 3 der Brennkraftmaschine 1 einzubringen. Bei dem hier dargestellten Ausführungsbeispiel ist der Injektor 7 eingerichtet, um den Brennstoff direkt - im Wege einer Direkteindüsung oder Direkteinspritzung - in den Brennraum 3 einzuspritzen oder einzudüsen.

Die Brennkraftmaschine 1 weist außerdem ein Steuergerät 9 auf, das eingerichtet ist, um für jedes Einbringereignis einer Mehrzahl von Einbringereignissen - wobei bei einem solchen Einbringereignis Brennstoff durch den Injektor 7 in den Brennraum 3 eingebracht wird - jeweils einen Verschleißwert für den Injektor 7 zu erfassen, jeden erfassten Verschleißwert einer Verschleißwertklasse einer Mehrzahl von Verschleißwertklassen zuzuordnen, und für jede Verschleißwertklasse der Mehrzahl von Verschleißwertklassen eine Klassenhäufigkeit der Verschleißwerte zu ermitteln, die der Verschleißwertklasse jeweils zugeordnet sind. Das Steuergerät 9 ist außerdem eingerichtet, um anhand der Klassenhäufigkeiten der Verschleißwertklassen einen Gesamtverschleißwert für den Injektor 7 zu berechnen, und einen Injektorzustand des Injektors 7 anhand des Gesamtverschleißwerts zu bewerten. Auf diese Weise ist es möglich, ein individuelles Wartungsintervall für den Injektor 7 festzulegen, diesen also insbesondere nicht etwa unnötig nach einer vorgeschriebenen, starren Zeitspanne tauschen zu müssen. Dabei muss jedoch nicht auf teure und komplexe injektorindividuelle Sensorik zurückgegriffen werden.

Weist die Brennkraftmaschine 1 eine Mehrzahl solcher Injektoren 7 auf, wird das Verfahren für jeden Injektor 7 separat durchgeführt, und es ergeben sich somit variable Injektorstandzeiten für die verschiedenen Injektoren 7 und damit eine Reduktion der mittleren Lebenszykluskosten. Insbesondere weist die Brennkraftmaschine 1 bevorzugt eine Mehrzahl vorzugsweise identisch ausgebildeter Brennräume 3 auf, wobei besonders bevorzugt jedem der Brennräume 3 ein separater Injektor 7 zugeordnet ist.

Das Steuergerät 9 ist insbesondere mit dem Injektor 7 zu dessen Ansteuerung wirkverbunden.

Vorzugsweise ist das Steuergerät 9 eingerichtet, um einen Brennstoffdruck von Brennstoff zu ermitteln, der an dem Injektor 7 ansteht. Das Steuergerät 9 ist hierzu mit einem Brennstoffdruck-Sensor 11 wirkverbunden. Dieser ist bei dem hier dargestellten Ausführungsbeispiel eingerichtet, um einen Brennstoffdruck in einer Brennstoffzuleitung 13 zu dem Injektor 7 zu erfassen. Es ist alternativ möglich, dass der Brennstoffdruck-Sensor 11 eingerichtet ist, um einen Hochdruck in einer gemeinsamen Hochdruckleiste für eine Mehrzahl von Injektor 7, insbesondere in einem sogenannten Common Rail, zu erfassen, wobei ein solcher Brennstoffdruck auch als Raildruck bezeichnet wird. Weiter alternativ ist es möglich, dass der Brennstoffdruck-Sensor 11 eingerichtet ist, um einen Brennstoffdruck in einem Einzelspeicher des Injektors 7 zu erfassen.

Das Steuergerät 9 ist außerdem bevorzugt eingerichtet, um einen Gegendruck zu ermitteln, gegen den der Brennstoff durch den Injektor 7 während eines Einbringereignisses in ein Volumen eingebracht wird, in dem der Gegendruck herrscht. Bei dem hier dargestellten Ausführungsbeispiel ist das Steuergerät 9 hierzu mit einem Brennraumdrucksensor 15 wirkverbunden, der den Brennraumdruck in dem Brennraum 3 als Gegendruck erfasst. Alternativ ist es insbesondere auch möglich, dass das Steuergerät 9 eingerichtet ist, um den Gegendruck, insbesondere den Brennraumdruck, anhand von wenigstens einem anderen Parameter aus einem Kennfeld zu ermitteln oder zu berechnen, insbesondere in Abhängigkeit von einem momentanen Betriebszustand der Brennkraftmaschine 1, oder um einen vorbestimmten, konstanten Wert für den Gegendruck zu verwenden.

Das Steuergerät 9 ist insbesondere eingerichtet zur Durchführung eines im Folgenden näher erläuterten Verfahrens zum Betreiben des Injektors 7 an der Brennkraftmaschine 1.

Im Rahmen des Verfahrens wird für eine Mehrzahl von Einbringereignissen jeweils ein Verschleißwert für den Injektor 7 erfasst, wobei jeder erfasste Verschleißwert einer Verschleißwertklasse einer Mehrzahl von Verschleißwert-lassen zugeordnet wird, wobei für jede Verschleißwertklasse der Mehrzahl von Verschleißwertklassen eine Klassenhäufigkeit der der Verschleißwertklasse zugeordneten erfassten Verschleißwerte ermittelt wird, wobei anhand der Klassenhäufigkeiten der Verschleißwertklassen ein Gesamtverschleißwert für den Injektor 7 berechnet wird, und wobei ein Injektorzustand des Injektors 7 anhand des Gesamtverschleißwerts bewertet wird.

Dabei wird bevorzugt als Verschleißwert eine für eine während eines Einbringereignisses an dem Injektor 7 auftretende Kavitation charakteristische Kavitationszahl erfasst.

Die Kavitationszahl wird bevorzugt anhand von Druckverhältnissen an dem Injektor 7 ermittelt, insbesondere als Quotient einer Differenz zwischen dem Brennstoffdruck am Injektor 7 zu dem Gegendruck, dividiert durch den Gegendruck, insbesondere gemäß der oben angegebenen Gleichung (1).

Der Gesamtverschleißwert wird bevorzugt berechnet als Summe der vorzugsweise gewichteten Klassenhäufigkeiten über die Verschleißwertklassen. Dabei werden vorzugsweise die Klassenhäufigkeiten zur Berechnung des Gesamtverschleißwerts mit einem vorbestimmten Klassenhäufigkeits-Maximalwert gewichtet. Die Berechnung des Gesamtverschleißwerts erfolgt vorzugsweise nach der oben angegebenen Gleichung (2).

Der vorbestimmte Klassenhäufigkeits-Maximalwert wird für jede Verschleißwertklasse vorzugsweise aus einem Kennfeld, insbesondere abhängig von einer Einbringdauer, ausgelesen.

Der Injektorzustand wird bevorzugt bewertet, indem der Gesamtverschleißwert mit einem vorbestimmten Gesamtverschleißwert-Maximalwert verglichen wird.

Vorzugsweise wird anhand des Gesamtverschleißwerts, insbesondere anhand des Vergleichs des Gesamtverschleißwerts mit dem Gesamtverschleißwert-Maximalwert, eine Reststandzeit für den Injektor 7 ermittelt, vorzugsweise unter Berücksichtigung eines Lastprofils und/oder einer Drehzahl der Brennkraftmaschine 1.

Vorzugsweise werden verschiedene Einbringereignisse innerhalb eines Arbeitsspiels der Brennkraftmaschine 1

separat verschiedenen Verschleißwertklassen zugeordnet.

Vorzugsweise werden zur Berechnung des Gesamtverschleißwerts alle verschiedenen Einbringereignisse innerhalb eines Arbeitsspiels gemeinsam berücksichtigt.

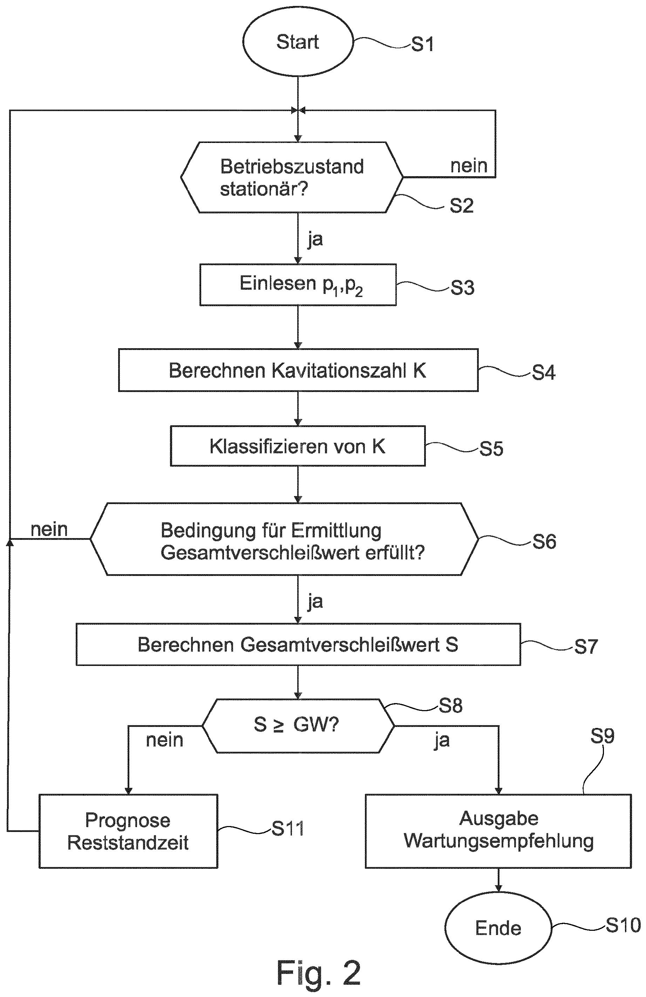

**Fig. 2** zeigt eine schematische Darstellung einer Ausführungsform des Verfahrens als Flussdiagramm.

Das Verfahren startet dabei in einem ersten Schritt S1 während des Betriebs der Brennkraftmaschine 1. In einem zweiten Schritt S2 wird optional geprüft, ob momentan ein stationärer Betriebszustand der Brennkraftmaschine 1 vorliegt. Ist dies nicht der Fall, wird der zweite Schritt S2 optional in einer Schleife solange wiederholt, bis ein stationärer Betriebszustand vorliegt. Ist dies der Fall, wird das Verfahren in einem dritten Schritt S3 fortgesetzt. Es ist aber auch möglich, das Verfahren so durchzuführen, dass entweder auch transiente Betriebszustände berücksichtigt werden, oder dass gänzlich außer Acht bleibt, ob die Brennkraftmaschine momentan in einem stationären Betriebszustand oder in einem transienten Betriebszustand betrieben wird.

In dem dritten Schritt S3 werden der Brennstoffdruck $p_1$ und der Gegendruck $p_2$ ermittelt, insbesondere erfasst, eingelesen oder aus einem Kennfeld ausgelesen, oder - im Fall des Gegendrucks $p_2$ - als vorbestimmter, konstanter Wert angenommen.

In einem vierten Schritt S4 wird der Verschleißwert, insbesondere als Kavitationszahl, insbesondere gemäß Gleichung (1) aus dem Brennstoffdruck $p_1$ und dem Gegendruck $p_2$, berechnet.

In einem fünften Schritt S5 wird der Verschleißwert klassifiziert, das heißt einer Verschleißwertklasse einer Mehrzahl von Verschleißwertklassen zugeordnet. Insbesondere erfolgt eine Histogrammierung der Kavitationszahlen aus einer Vielzahl von Durchläufen des Verfahrens, das vorzugsweise fortwährend wiederholt wird.

In einem sechsten Schritt S6 wird geprüft, ob wenigstens eine Bedingung zur Ermittlung eines Gesamtverschleißwerts erfüllt ist, wobei die Bedingung vorzugsweise ein Ablauf einer vorbestimmten Zeit seit einer letzten Berechnung des Gesamtverschleißwerts, insbesondere einer vorbestimmten Anzahl von Betriebsstunden, oder eine bestimmte Anzahl durchgeführter Einbringereignisse nach dem letzten Berechnen des Gesamtverschleißwerts, oder das Eintreten eines anderen Ereignisses ist. Ist die Bedingung erfüllt, wird das Verfahren in einem siebten Schritt S7 fortgesetzt, andernfalls springt das Verfahren zurück vor den zweiten Schritt S2 und wird somit mit dem zweiten Schritt S2 fortgesetzt. Bei dieser Ausführungsform des Verfahrens wird also der Gesamtverschleißwert nicht nach jedem Durchlauf der Schritte S3 bis S5 berechnet. Es ist aber auch möglich, dass der sechste Schritt S6 entfällt oder die Bedingung entsprechend so angepasst wird, dass der Gesamtverschleißwert nach jedem Durchlauf der Schritte S3 bis S5 berechnet wird. Durch die Bedingung in Schritt S6 kann zum einen Zeit gespart werden, zum anderen wird gewährleistet, dass eine ausreichend aussagekräftige Statistik für die Histogrammierung der Kavitationszahlen gegeben ist.

In dem siebten Schritt S7 wird der Gesamtverschleißwert anhand der Klassenhäufigkeiten der Verschleißwertklassen berechnet, insbesondere gemäß der Gleichung (2), nämlich als Summe der bevorzugt gewichteten Klassenhäufigkeiten über die Verschleißwertklassen, wobei diese insbesondere mit einem ihnen jeweils zugeordneten vorbestimmten Klassenhäufigkeits-Maximalwert gewichtet werden.

In einem achten Schritt S8 wird sodann der Injektorzustand bewertet, indem der Gesamtverschleißwert mit dem vorbestimmten Gesamtverschleißwert-Maximalwert GW verglichen wird.

Wird dabei in dem achten Schritt S8 festgestellt, dass der Gesamtverschleißwert größer oder gleich dem Gesamtverschleißwert-Maximalwert ist, wird in einem neunten Schritt S9 eine Wartungsempfehlung ausgegeben, insbesondere eine Empfehlung, den Injektor 7 zu tauschen, und das Verfahren endet in einem zehnten Schritt S10.

Wird dagegen in dem achten Schritt S8 festgestellt, dass der Gesamtverschleißwert nicht größer oder gleich dem Gesamtverschleißwert-Maximalwert GW ist, wird bevorzugt in einem elften Schritt S11 eine Prognose bezüglich einer Reststandzeit des Injektors 7 erstellt, insbesondere unter Berücksichtigung eines vorangegangenen Lastprofils und/oder einer Drehzahl der Brennkraftmaschine 1. Vorzugsweise wird das Ergebnis der Prognose, insbesondere nämlich die Reststandzeit, ausgegeben. Das Verfahren wird dann mit dem zweiten Schritt S2 fortgesetzt.

Insbesondere wird das Verfahren bevorzugt während des Betriebs der Brennkraftmaschine 1 solange fortgesetzt, insbesondere iteriert, bis entweder der Betrieb der Brennkraftmaschine 1 beendet wird, oder bis eine Wartungsempfehlung für den Injektor 7 in dem neunten Schritt S9 generiert wird.

## Patentansprüche

1. Verfahren zum Betreiben eines Injektors (7) an einer Brennkraftmaschine (1), wobei

   - mittels des Injektors (7) Brennstoff in einen Brennraum (3) der Brennkraftmaschine (1) eingebracht wird, wobei
   - für eine Mehrzahl von Einbringereignissen jeweils ein Verschleißwert für den Injektor (7) erfasst wird, wobei
   - jeder erfasste Verschleißwert einer Verschleißwertklasse einer Mehrzahl von Verschleißwertklassen zugeordnet wird, wobei
   - für jede Verschleißwertklasse der Mehrzahl von Verschleißwertklassen eine Klassenhäufigkeit der der Verschleißwertklasse zugeordneten erfassten Verschleißwerte ermittelt wird, wobei
- anhand der Klassenhäufigkeiten der Verschleißwertklassen ein Gesamtverschleißwert für den Injektor (7) berechnet wird, wobei
- ein Injektorzustand des Injektors (7) anhand des Gesamtverschleißwerts bewertet wird, wobei
- als Verschleißwert eine für eine während eines Einbringereignisses an dem Injektor (7) auftretende Kavitation charakteristische Kavitationszahl erfasst wird, wobei
- die Kavitationszahl anhand von Druckverhältnissen an dem Injektor (7) ermittelt wird, als Quotient einer Differenz zwischen einem Brennstoffdruck am Injektor (7) und einem Gegendruck dividiert durch den Gegendruck.

2. Verfahren nach Anspruch 1, **dadurch gekennzeichnet, dass** der Gesamtverschleißwert berechnet wird als Summe der vorzugsweise gewichteten Klassenhäufigkeiten über die Verschleißwertklassen.

3. Verfahren nach einem der vorhergehenden Ansprüche, **dadurch gekennzeichnet, dass** die Klassenhäufigkeiten zur Berechnung des Gesamtverschleißwerts mit einem vorbestimmten Klassenhäufigkeits-Maximalwert gewichtet werden.

4. Verfahren nach Anspruch 3, **dadurch gekennzeichnet, dass** der vorbestimmte Klassenhäufigkeits-Maximalwert für jede Verschleißwertklasse aus einem Kennfeld, vorzugsweise abhängig von einer Einbringdauer, ausgelesen wird.

5. Verfahren nach einem der vorhergehenden Ansprüche, **dadurch gekennzeichnet, dass** der Injektorzustand bewertet wird, indem der Gesamtverschleißwert mit einem vorbestimmten Gesamtverschleißwert-Maximalwert verglichen wird.

6. Verfahren nach einem der vorhergehenden Ansprüche, **dadurch gekennzeichnet, dass** anhand des Gesamtverschleißwerts eine Reststandzeit für den Injektor (7) ermittelt wird, vorzugsweise unter Berücksichtigung eines Lastprofils und/oder einer Drehzahl der Brennkraftmaschine (1).

7. Verfahren nach Anspruch 5, **dadurch gekennzeichnet, dass** anhand des Vergleichs des Gesamtverschleißwerts mit dem Gesamtverschleißwert-Maximalwert eine Reststandzeit für den Injektor (7) ermittelt wird, vorzugsweise unter Berücksichtigung eines Lastprofils und/oder einer Drehzahl der Brennkraftmaschine (1).

8. Verfahren nach einem der vorhergehenden Ansprüche, **dadurch gekennzeichnet, dass** verschiedene Einbringereignisse innerhalb eines Arbeitsspiels der Brennkraftmaschine (1) separat verschiedenen Verschleißwertklassen zugeordnet werden.

9. Verfahren nach einem der vorhergehenden Ansprüche, **dadurch gekennzeichnet, dass** zur Berechnung des Gesamtverschleißwerts alle verschiedenen Einbringereignisse innerhalb eines Arbeitsspiels gemeinsam berücksichtigt werden.

10. Steuergerät (9) für eine Brennkraftmaschine (1), wobei das Steuergerät (9) eingerichtet ist, um für eine Mehrzahl von Einbringereignissen von Brennstoff in einen Brennraum (3) der Brennkraftmaschine (1) jeweils einen Verschleißwert für einen Injektor (7) zu erfassen, um jeden erfassten Verschleißwert einer Verschleißwertklasse einer Mehrzahl von Verschleißwertklassen zuzuordnen, um für jede Verschleißwertklasse der Mehrzahl von Verschleißwertklassen eine Klassenhäufigkeit der der Verschleißwertklasse zugeordneten erfassten Verschleißwerte zu ermitteln, um anhand der Klassenhäufigkeiten der Verschleißwertklassen einen Gesamtverschleißwert für den Injektor (7) zu berechnen, um einen Injektorzustand des Injektors (7) anhand des Gesamtverschleißwerts zu bewerten, um als Verschleißwert eine für eine während eines Einbringereignisses an dem Injektor (7) auftretende Kavitation charakteristische Kavitationszahl zu erfassen, und um die Kavitationszahl anhand von Druckverhältnissen an dem Injektor (7) zu ermitteln, als Quotient einer Differenz zwischen einem Brennstoffdruck am Injektor (7) und einem Gegendruck dividiert durch den Gegendruck.

11. Brennkraftmaschine (1), mit wenigstens einen Brennraum (3) sowie wenigstens einem Injektor (7), der eingerichtet ist, um Brennstoff in den wenigstens einen Brennraum (3) einzubringen, und mit einem Steuergerät (9) nach Anspruch 10.

**Claims**

1. Method for operating an injector (7) in a combustion engine (1), wherein

   - a fuel is introduced into a combustion chamber (3) of the internal combustion engine (1) by means of the injector (7), wherein
   - a wear value for the injector (7) is recorded for each of a plurality of introduction events, wherein
   - each recorded wear value is assigned to a wear value class of a plurality of wear value classes, wherein
   - for each wear value class of the plurality of wear value classes, a class incidence of the recorded wear values assigned to the respective wear value class is determined, wherein
   - a total wear value for the injector (7) is calculated on the basis of the class incidences of the wear value classes, wherein
   - an injector status of the injector (7) is evaluated on the basis of the total wear value, wherein
   - a cavitation number which is characteristic of a cavitation occurring at the injector (7) during an introduction event is recorded as the wear value, wherein
   - the cavitation number is determined on the basis of pressure ratios at the injector (7), as a quotient of a difference between a fuel pressure at the injector (7) and a counter pressure divided by the counter pressure.

2. Method according to claim 1, **characterised in that** the total wear value is calculated as a sum of the preferably weighted class incidences across the wear value classes.

3. Method according to one of the preceding claims, **characterised in that** for calculating the total wear value, the class incidences are weighted with a predetermined class incidence maximum value.

4. Method according to claim 3, **characterised in that** the predetermined class incidence maximum value for each wear value class is read out from a characteristic map, preferably depending on an introduction duration.

5. Method according to one of the preceding claims, **characterised in that** the injector status is evaluated by comparing the total wear value with a predetermined total wear value maximum value.

6. Method according to one of the preceding claims, **characterised in that** a remaining service life for the injector (7) is determined on the basis of the total wear value, preferably taking into account a load profile and/or a rotational speed of the internal combustion engine (1).

7. Method according to claim 5, **characterised in that** a remaining service life for the injector (7) is determined on the basis of the comparison of the total wear value with the total wear value maximum value, preferably taking into account a load profile and/or the rotational speed of the internal combustion engine (1).

8. Method according to one of the preceding claims, **characterised in that** different introduction events within a working cycle of the internal combustion engine (1) are assigned separately to different wear value classes.

9. Method according to one of the preceding claims, **characterised in that** all different introduction events within a working cycle are taken into account together to calculate the total wear value.

10. Control unit (9) for an internal combustion engine (1), wherein the control unit (9) is configured to record a wear value for an injector (7) for each of a plurality of fuel introduction events into a combustion chamber (3) of the internal combustion engine (1), to assign each recorded wear value to one of a plurality of wear value classes, to determine a class incidence of the recorded wear values assigned to the respective wear value class for each wear value class of the plurality of wear value classes, to calculate a total wear value for the injector (7) on the basis of the class incidences of the wear value classes, to evaluate an injector status of the injector (7) on the basis of the total wear value, to record a cavitation number which is characteristic of a cavitation occurring at the injector (7) during an introduction event as the wear value, and to determine the cavitation number on the basis of pressure ratios at the injector (7), as a quotient of a difference between a fuel pressure at the injector (7) and a counter pressure divided by the counter pressure.

11. Internal combustion engine (1) with at least one combustion chamber (3) and at least one injector (7) which is designed to introduce fuel into the at least one combustion chamber (3), and with a control unit (9) according to claim 10.

**Revendications**

1. Procédé de fonctionnement d'un injecteur (7) sur un moteur à combustion interne (1), dans lequel

   - au moyen de l'injecteur (7) du carburant est introduit dans une chambre de combustion (3) du moteur à combustion interne (1), dans lequel
   - pour une pluralité d'évènements de combustion, une valeur d'usure de l'injecteur (7) est saisie à chaque fois, dans lequel
   - chaque valeur d'usure saisie d'une classe de valeur d'usure est affectée à une pluralité de classes de valeur d'usure, dans lequel
   - pour chaque classe de valeur d'usure de la pluralité de classes de valeur d'usure est déterminée une fréquence de classe des valeurs d'usure saisies affectées à la classe de valeur d'usure, dans lequel
   - à l'aide des fréquences de classe des classes de valeurs d'usure est calculée une valeur d'usure globale de l'injecteur (7), dans lequel
   - un état d'injecteur de l'injecteur (7) est évalué à l'aide de la valeur d'usure globale, dans lequel
   - est saisi comme valeur d'usure un nombre de cavitation caractéristique d'une cavitation apparaissant sur l'injecteur (7) pendant un évènement d'introduction, dans lequel
   - le nombre de cavitation est déterminé à l'aide de rapports de compression sur l'injecteur (7), comme quotient d'une différence entre une pression du carburant sur l'injecteur (7) et une contre-pression divisée par la contre-pression.

2. Procédé selon la revendication 1, **caractérisé en ce que** la valeur d'usure globale est calculée comme la somme des fréquences de classe de préférence pondérées sur les classes de valeur d'usure.

3. Procédé selon l'une des revendications précédentes, **caractérisé en ce que** les fréquences de classe pour le calcul de la valeur d'usure globale sont pondérées avec une valeur maximale de fréquence de classe prédéterminée.

4. Procédé selon la revendication 3, **caractérisé en ce que** la valeur maximale de fréquence de classe prédéterminée pour chaque classe de valeur d'usure est lue à partir d'un diagramme caractéristique, de préférence en fonction d'une durée d'introduction.

5. Procédé selon l'une des revendications précédentes, **caractérisé en ce que** l'état d'injecteur est évalué en comparant la valeur d'usure globale à une valeur maximale de valeur d'usure globale prédéterminée.

6. Procédé selon l'une des revendications précédentes, **caractérisé en ce qu'**à l'aide de la valeur d'usure globale est déterminée une durée de vie résiduelle de l'injecteur (7), de préférence, en tenant compte d'un profil de charge et/ou d'une vitesse de rotation du moteur à combustion interne (1).

7. Procédé selon la revendication 5, **caractérisé en ce qu'**en comparant la valeur d'usure globale à la valeur maximale de valeur d'usure globale est déterminée une durée de vie résiduelle de l'injecteur (7), de préférence en tenant compte d'un profil de charge et/ou d'une vitesse de rotation du moteur à combustion interne (1).

8. Procédé selon l'une des revendications précédentes, **caractérisé en ce que** différents évènements d'introduction au sein d'un cycle de travail de la machine à combustion interne (1) sont affectés séparément à des classes de valeur d'usure différentes.

9. Procédé selon l'une des revendications précédentes, **caractérisé en ce que** pour calculer la valeur d'usure globale, tous les évènements d'introduction différents au sein d'un cycle de travail sont pris en compte ensemble.

10. Appareil de commande (9) d'un moteur à combustion interne (1), dans lequel l'appareil de commande (9) est configuré pour saisir à chaque fois une valeur d'usure d'un injecteur (7) pour une pluralité d'évènements d'introduction de carburant dans une chambre de combustion (3) du moteur à combustion interne (1), pour affecter chaque valeur d'usure saisie d'une classe de valeur d'usure à une pluralité de classes de valeur d'usure, pour déterminer pour chaque classe de valeur d'usure de la pluralité de classes de valeur d'usure, une fréquence de classe des valeurs d'usure saisies affectées à la classe de valeur d'usure, pour calculer, à l'aide des fréquences de classe des classes de valeur d'usure, une valeur d'usure globale de l'injecteur (7), pour évaluer un état d'injecteur de l'injecteur (7) à l'aide de la valeur d'usure globale, pour saisir comme valeur d'usure un nombre de cavitation caractéristique d'une cavitation apparaissant pendant un évènement d'introduction sur l'injecteur (7), et pour déterminer le nombre de cavitation à l'aide de rapports de compression sur l'injecteur (7), comme quotient d'une différence entre une pression de carburant sur l'injecteur (7) et une contre-pression divisée par la contre-pression.

11. Moteur à combustion interne (1), avec au moins une chambre de combustion (3) ainsi qu'au moins un injecteur (7) qui est configuré pour introduire du carburant dans la au moins une chambre de combustion (3), et avec un appareil de commande (9) selon la revendication 10.

Fig. 1

**Start** — S1

**Betriebszustand stationär?** — S2 / nein

ja

**Einlesen $p_1, p_2$** — S3

**Berechnen Kavitationszahl K** — S4

**Klassifizieren von K** — S5

nein — **Bedingung für Ermittlung Gesamtverschleißwert erfüllt?** — S6

ja

**Berechnen Gesamtverschleißwert S** — S7

**S ≥ GW?** — S8

nein / ja

**Prognose Reststandzeit** — S11

**Ausgabe Wartungsempfehlung** — S9

**Ende** — S10

# Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102019001677 A1
- US 20200232411 A1
- EP 3121425 A1